# DEMANDE DE BREVET EUROPEEN

(11) **EP 1 914 277 A1**
(43) Date de publication de la demande: **23.04.2008**
(21) Numéro de dépôt: 07447027.9
(22) Date de dépôt: 19.04.2007
(51) Int. Cl.: C09D 7/12, C09D 183/04, C09K 3/16, C08J 5/00, C08K 3/04, C08K 7/04, C08K 7/06, C08K 7/10

(54) **Composition anti-adhésive et antistatique**

(30) Priorité: 18.10.2006 US 852771 P
(71) Demandeur: Nanocyl S.A., 5060 Sambreville (BE)
(72) Inventeur: Claes, Michaël, 4020 Liege (BE); Bonduel, Daniel, 7000 Mons (BE); Dubois, Philippe, 4260 Braives (BE); Beigbeder, Alexandre, 59300 Valenciennes (FR); Devalckenaere, Myriam, 59730 Vertain (FR)
(74) Mandataire: pronovem

(57) **Abrégé**

La présente invention se rapporte à l'utilisation d'une composition comme revêtement antiadhésif comprenant un polymère réticulé à base de polysiloxane et au moins une charge nanocylindrique.

## Description

### Objet de l'invention

La présente invention se rapporte à une composition antiadhésive et antistatique qui confère aux surfaces ou supports sur lesquels elle est appliquée une résistance aux salissures.

### Etat de la technique

Toute surface, quelle qu'elle soit, est potentiellement exposée à des salissures de tout genre, a fortiori s'il s'agit d'une surface extérieure exposée aux intempéries. C'est en particulier le cas des surfaces intérieures ou extérieures d'ouvrages en briques, en pierre, en bois ou en métal, exposés par exemple à la pluie, la boue, la poussière, la graisse, la pollution atmosphérique, ou encore des surfaces qui peuvent également être recouvertes de graffiti ou d'affiches non voulus ou non autorisés.

Habituellement, les surfaces sont débarrassées de leurs salissures par un nettoyage plus ou moins fréquent, qui nécessite bien souvent l'utilisation d'abrasifs, de détergents puissants et/ou de solvants.

Pour faciliter le nettoyage et/ou diminuer leur fréquence, l'emploi de revêtements ou vernis antisalissures est bien connu, en particulier des revêtements ou vernis élaborés à base de polymères halogénés ou de polymères silicones qui peuvent comprendre ou non des charges minérales.

Parmi les polymères halogénés, les fluoro-polymères sont les plus couramment utilisés, en particulier le polytétrafluoroéthylène ou PTFE, qui présente une excellente résistance chimique, un faible coefficient de frottement et une excellente résistance à l'abrasion.

Les polymères silicones présentent quant à eux des résistances mécaniques et chimiques équivalentes à celles des fluoro-polymères mais sont bien moins coûteux à produire. Le polydiméthylsiloxane ou PDMS est le polymère silicone le plus couramment utilisé.

Le caractère anti-salissure d'un revêtement ou d'un vernis est étroitement lié au caractère antiadhésif ou hydrophobe de la substance ou des substances qui le composent. De façon tout à fait classique, l'on juge du caractère antiadhésif d'un revêtement grâce des mesures de l'angle de contact avec une goutte d'un liquide et par des calculs d'énergie de surface.

L'angle de contact rend compte de l'aptitude d'un liquide à s'étaler sur une surface par mouillabilité et sa détermination se fait par la mesure de l'angle θ entre la tangente à la goutte de liquide au point de contact et la surface solide plane sur laquelle est déposée la goutte (schéma 1).

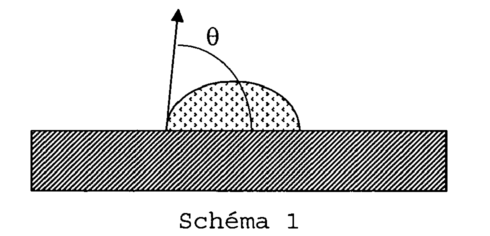

Généralement, le liquide utilisé est de l'eau ultra pure, ce qui permet de déterminer le caractère hydrophile ou hydrophobe d'une surface mais en utilisant différents liquides, cette mesure permet également de déterminer l'énergie libre de surface d'une surface suivant différents modèles décrits dans la littérature.

Le PDMS est intrinsèquement hydrophobe, cependant, appliqué sous forme de film, il possède un angle de contact de l'ordre de 100° à 110°. Néanmoins, lors d'un contact prolongé avec de l'eau, il apparaît que le PDMS subit une modification de sa surface, ce qui le rend plus hydrophile, moins hydrophobe, et donc moins antiadhésif.

Pour améliorer les caractéristiques anti-adhésives du PDMS, Meihua Jin dans un article intitulé « Super-hydrophobic PDMS surface with Ultra-low adhesive force », publié dans Macromolecular Rapid Communication, 2005, 26, pp. 1805-1809, propose d'utiliser une propriété de surface communément appelée "l'effet lotus" et de reproduire sur le film de PDMS les microsphères présentes sur la surface des feuilles de lotus et qui permettent à ces feuilles de faire glisser les éléments étrangers sur leur surface sans pouvoir y adhérer. Ainsi, une gravure laser de la surface du PDMS permet d'obtenir un revêtement présentant un angle de contact avec l'eau de plus de 160° et ayant un angle de glissement inférieur à 5°. Néanmoins, cette technique est inadaptée à la majeure partie des applications potentielles d'un tel PDMS modifié. De plus, il s'agit d'une technique difficile à mettre en oeuvre et qui reste très onéreuse du fait de l'emploi d'un laser.

### Buts de l'invention

La présente invention vise à fournir une composition antiadhésive qui ne présente pas les inconvénients de l'état de la technique.

Elle vise en particulier à fournir une composition antiadhésive de mise en oeuvre facilitée.

Elle vise en outre à fournir une composition antiadhésive qui conserve ses propriétés antiadhésives même lorsqu'elle est soumise à un contact prolongé avec de l'eau.

Elle vise également à fournir une composition antiadhésive qui confère aux supports sur lesquels elle est appliquée une résistance aux salissures.

Elle vise de plus à fournir une composition antiadhésive qui permet de diminuer la fréquence des nettoyages des supports sur lesquels elle est appliquée et de diminuer le temps d'intervention.

### Résumé de l'invention

La présente invention se rapporte à l'utilisation d'une composition comprenant un polymère réticulé à base de polysiloxane et au moins une charge nanocylindrique comme revêtement antiadhésif.

Selon des formes particulières de réalisation, la composition comporte l'une ou plusieurs des caractéristiques suivantes :
- la charge nanocylindrique représente entre 0,01% et 5% en poids du poids total de ladite composition ;
- la charge nanocylindrique représente entre 0,01% et 1% en poids du poids total de ladite composition ;
- la charge nanocylindrique comprend de la sépiolite ;
- la sépiolite représente entre 0,01% et 3,5% en poids du poids total de ladite composition ;
- la charge nanocylindrique comprend des nanotubes de carbone ;
- les nanotubes de carbone représentent entre 0,01% et 0,5% en poids du poids total de ladite composition ;
- la composition comprend de la sépiolite et des nanotubes de carbone ;
- les nanotubes de carbone sont choisis parmi le groupe des nanotubes de carbone à simple paroi (SWNTs), à double paroi (DWNTs) ou à multiple paroi (MWNTs).

La présente invention se rapporte également à une composition antiadhésive et antistatique comprenant un polymère réticulé à base de polysiloxane et une concentration de nanotubes de carbone comprise entre 0,1% et 1% en poids, ladite composition ayant une résistivité électrique inférieure à 100.000.000 Ohm.cm.

Selon une forme particulière de réalisation, la composition antiadhésive et antistatique comporte un polymère réticulé à base de polysiloxane et une concentration de nanotubes de carbone multiparoi comprise entre 0,5% et 1% en poids, ladite composition ayant une résistivité électrique inférieure à 250.000 Ohm.cm.

L'invention divulgue également l'utilisation en tant que revêtement antistatique d'une composition comprenant un polymère réticulé à base de polysiloxane, ladite composition comportant une concentration de nanotubes de carbone multiparoi comprise entre 0.01 et 5% en poids.

Avantageusement, elle divulgue l'utilisation en tant que revêtement antistatique d'une composition, comprenant un polymère réticulé à base de polysiloxane, ladite composition comportant une concentration de nanotubes de carbone multiparoi comprise entre 0.1 et 1% en poids.

### Brève description des figures

La figure 1 représente les différences de valeurs de l'angle de contact d'un revêtement PDMS sans charge avant et après son immersion dans de l'eau.

Les figures 2a à 2c représentent des images de microscopie à force atomique d'un revêtement PDMS ne comprenant pas de charge avant une immersion dans de l'eau (Fig.2a), après immersion (Fig.2b) et après immersion et séchage (Fig.2c).

La figure 3 représente schématiquement la modification de structure que peut subir une chaîne polysiloxane dans un environnement très polaire.

La figure 4 représente les valeurs de l'angle de contact de surface d'un revêtement PDMS comprenant 3,5% et 10% en poids de sépiolite et d'un revêtement PDMS comprenant 1 à 10% de cloisite 30B, avant et après une immersion dans de l'eau.

Les figures 5a à 5c représentent des images de microscopie à force atomique, avant une immersion dans de l'eau, d'un revêtement PDMS ne comprenant pas de charge (Fig.5a), un revêtement PDMS comprenant 3,5% en poids de sépiolite (Fig.5b) et un revêtement PDMS 10% en poids de sépiolite (Fig.5c).

Les figures 6a à 6c représentent des images de microscopie à force atomique, après une immersion dans de l'eau d'un revêtement PDMS ne comprenant pas de charge (Fig.6a), un revêtement PDMS comprenant 3,5% en poids de sépiolite (Fig.6b) et un revêtement PDMS 10% en poids de sépiolite (Fig.6c).

La figure 7 représente les valeurs de l'angle de contact de surface d'un revêtement PDMS comprenant 0,01% à 5% de nanotubes de carbone (NC7000) et d'un revêtement PDMS comprenant 1 à 5% de cloisite 30B avant et après immersion dans de l'eau.

La figure 8 représente l'énergie de surface d'un revêtement PDMS ne comprenant aucune charge et un PDMS comprenant de 0.01% à 5% de nanotubes de carbone tel que mesuré par angle de contact.

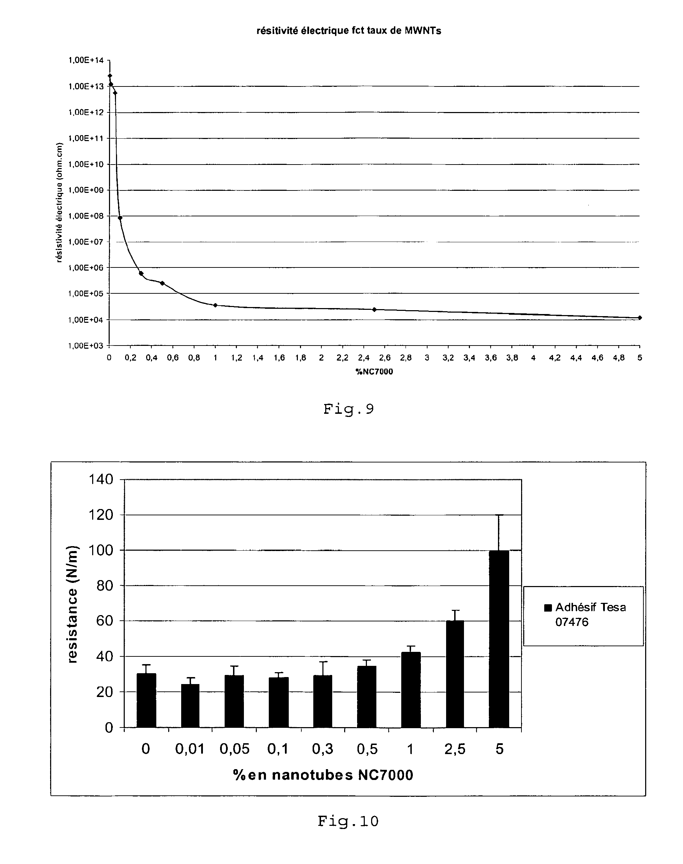

La figure 9 représente la variation de la résistivité électrique en fonction du pourcentage de nanotubes de carbone multiparoi (NC 7000) d'un revêtement PDMS comprenant 0,01% à 5% de nanotubes de carbone. Il est remarquable de constater que la résistivité de surface est déjà inférieure à 100.000 Ohm.cm pour une concentration en nanotubes de carbone inférieure à 1% en poids dans le PDMS. Par ailleurs, on atteint déjà une résistivité de surface inférieure à 1.000.000 Ohm.cm avec une concentration en nanotubes de carbone inférieure à 0.3% en poids dans le PDMS. On atteint déjà une résistivité inférieure à 100.000.000 Ohm.cm pour une concentration en nanotubes de carbone de 0,1% en poids dans le PDMS.

La figure 10 représente la résistance au pelage de revêtements PDMS comprenant 0,01% à 5% de nanotubes de carbone.

Les figures 11a et 11b représentent les images de microscopie électronique des bandes adhésives du test de pelage d'une composition comprenant a) 1% de nanotubes de carbone, b) 5% de nanotubes de carbone.

La figure 12 représente la variation de viscosité du précurseur du polymère en fonction de la quantité de charge pour des composites comprenant des nanotubes de carbone, de la sépiolite ou de la cloisite 30B.

La figure 13 représente la variation de viscosité du précurseur du polymère en fonction de la quantité de charge pour des compositions comprenant des nanotubes de carbone de différente nature.

### Description détaillée de l'invention

Afin de répondre à la problématique de l'obtention d'une composition antiadhésive de mise en oeuvre facilitée qui confère aux supports et aux surfaces sur lesquels elle est appliquée une résistance aux salissures et qui conserve ses propriétés antiadhésives, même lorsqu'elle est soumise à un contact prolongé avec de l'eau, l'invention propose de façon originale l'emploi d'une charge nanocylindrique dans un polymère réticulé à base de polysiloxane.

On entend par « support » tout matériel pouvant être recouvert d'un polymère et par « surface » toute surface, qu'elle soit intérieure ou extérieure, verticale ou horizontale de n'importe quel corps ou objet. Sans être limitatif, les supports concernés peuvent être des supports souples, notamment fibreux, tissés ou non, qui peuvent être recouverts d'au moins une couche de renfort, par exemple des toiles textiles, ou bien des supports non-souples, par exemples des pièces en métal, en plastique ou en céramique, ou bien encore des supports polymères ou élastomères, en particulier des films plastiques, comme par exemple des films d'emballage de protection. Il peut également s'agir de la surface de tout objet, par exemple les surfaces internes ou externes d'un bâtiment, d'une habitation ou d'un véhicule.

On entend par « charge nanocylindrique » une charge ayant la forme d'un cylindre, d'une aiguille ou de fibre, et dont deux des trois dimensions de la charge sont inférieures à 100nm, voire même de l'ordre de un à quelques dizaines de nanomètres.

Selon une forme de réalisation préférée de l'invention, le polymère à base de polysiloxane utilisé est le Sylgard 184 de Dow Corning, une résine qui réticule par hydrosilylation.

On entend par « résine qui réticule par hydrosilylation », une résine obtenue à partir de deux précurseurs de type polysiloxane, l'un comportant les groupes vinyles et l'autre des groupes hydrosilanes.

La réticulation consiste en une réaction d'addition des groupes hydrosilanes sur les groupes vinyles (Schéma 2).

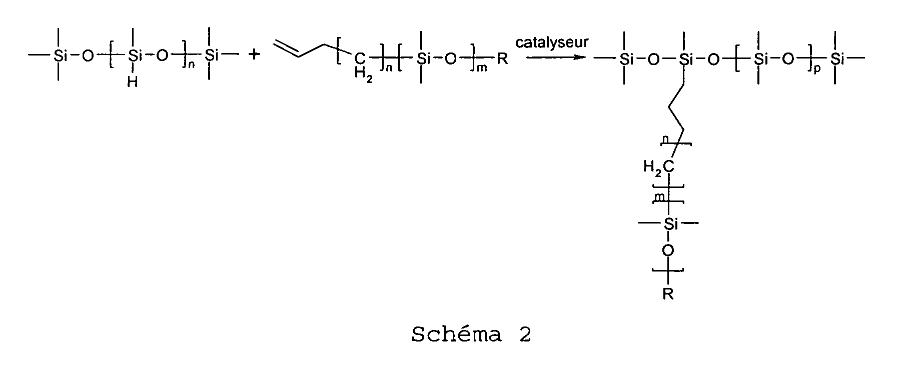

La composition de la résine Sylgard 184 de Dow Corning est donnée dans le tableau 1 et la structure chimique des composants est donnée dans les schémas 3 à 6.

**Tableau 1 : Composition de la résine**

| | Précurseur A | Précurseur B |
|---|---|---|
| Constituant 1 Nature et pourcentage | PDMS terminé vinyle SFD 117 67% | Polymère Si-H (0.76% de H, MDD (H)) 60% |
| Constituant 2 Nature et pourcentage | VQM 1 (2% en vinyle) 31% | SFD 117 39% |
| Constituant 3 Nature et pourcentage | Catalyseur Platine 0.14% | Inhibiteur méthyle cyclotetra siloxane 1% |
| Autres constituants | Composés cycliques et silicone de bas poids moléculaire volatile (1.5%) et xylène (0.7%) | |
| Viscosité dynamique | 4817 cP | 89.1 cP |

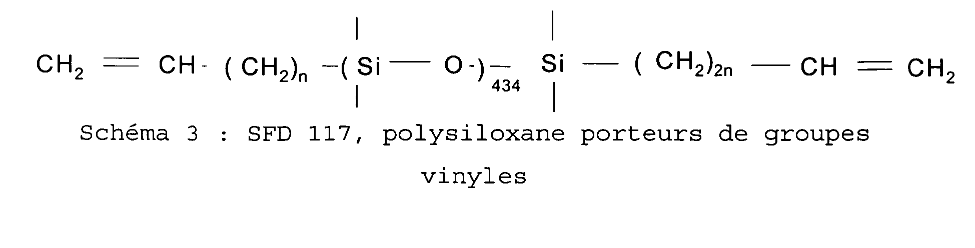

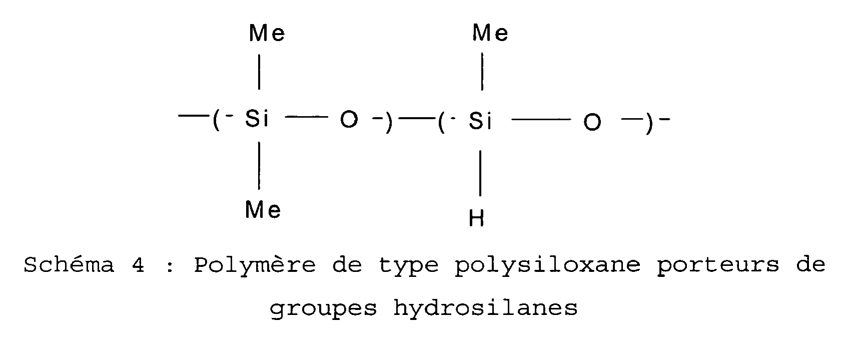

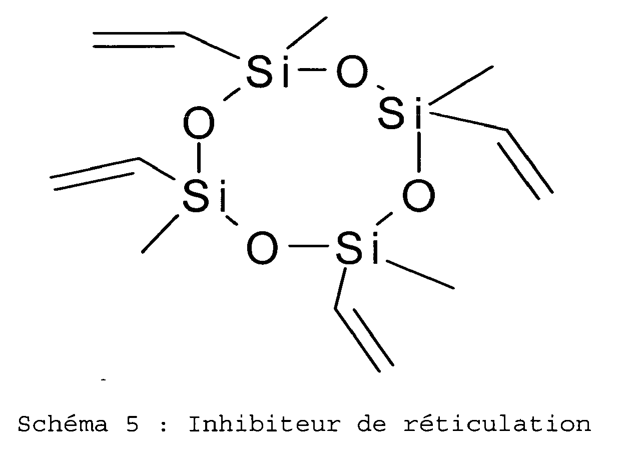

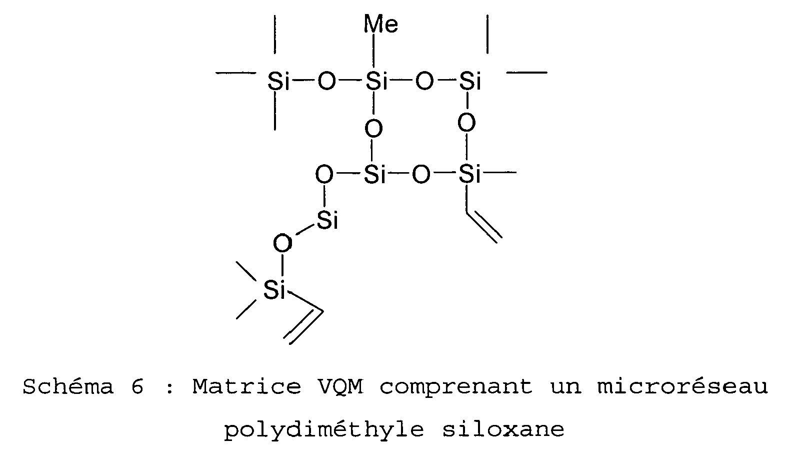

La charge nanocylindrique est toute charge adéquate ayant la forme d'un cylindre, d'une aiguille ou d'une fibre, et dont deux des trois dimensions de la charge sont inférieures à 100nm, voire même de l'ordre de un à quelques dizaines de nanomètres. De préférences, il s'agit de sépiolite ou de nanotubes de carbone, ou une combinaison de sépiolite et de nanotubes de carbone.

La sépiolite est une argile à structure fibreuse de formule M₉₄Si₆O₁₅ (OH) ₂•6H₂O. Elle est généralement constituée de fibres de l'ordre de 0,1 à 5 *µ*m de long et de 5 à 30nm de diamètre.

Les nanotubes de carbone sont une structure cristalline particulière d'atomes de carbone de forme tubulaire, creuse et close, de l'ordre de 0,1 à 10µm de long et de 2 à 30nm de diamètre. Il peut s'agir de nanotubes de carbone à simple paroi (SWNTs), à double paroi (DWNTs) ou à multiple paroi (MWNTs). De préférence, il s'agit de nanotubes de carbone à multiple paroi (MWNTs). De préférence, il s'agit de nanotubes de carbone multiparoi de 1,5 à 1,7 *µ*m de longueur et 7 à 12nm de diamètre, n'ayant subi aucun traitement post-synthétique, en particulier pas de purification.

De préférence, la charge nanocylindrique représente en poids entre 0,01% et 5% du poids total de ladite composition.

Différentes compositions ont été préparées et leurs propriétés anti-adhésives ont été étudiées par des mesures d'angle de contact avec l'eau. Parmi ces compositions, certaines ne comprennent aucune charge, d'autres comprennent des charges nanocylindriques, de la sépiolite entre 3,5% et 10%, ou des nanotubes de carbone entre 0.01% et 5%, d'autres enfin comprennent des charges plaquettaires comme de la montmorillonite entre 1% et 10% (cloisite 30B). Contrairement aux nanotubes de carbone et à la sépiolite, la montmorillonite est une charge dont seulement une des trois dimensions est inférieure à 100 nm. La montmorillonite est un minéral composé de silicate d'aluminium et de magnésium hydraté appartenant à la famille des phyllosilicates.

Classiquement, les compositions à base de polysiloxane sont obtenues à partir des précurseurs A et B qui sont mélangés sous agitation, pendant 30 minutes par exemple, dans un solvant avec un ratio de 10 pour 1 (10 parts de précurseur A pour une part du précurseur B). Les charges, pour les compositions qui en comprennent, sont additionnées au précurseur A sous agitation, par exemple à 500 rpm pendant 30 minutes, avant l'addition du précurseur B. Le mélange ainsi obtenu est déposé sur des lamelles pour microscope qui sont portées à 70°C pendant 1h30, puis à 105°C pendant 8 heures et enfin à 70°C pendant 8h sous vide. Les épaisseurs de revêtement ainsi obtenues sont de l'ordre de 150µm. Les lamelles sont ensuite découpées afin d'obtenir des échantillons de 1cm². Certaines sont immergées dans de l'eau déminéralisée pendant 48h ou une semaine, d'autre ne le sont pas et servent de témoin.

Dans une autre forme de réalisation, les compositions à base de polysiloxane peuvent également être obtenues à partir des précurseurs A et B qui sont mélangés préalablement sous agitation, par exemple pendant trois minutes, dans une proportion de 10 parts de précurseur A pour une part du précurseur B. Les charges, pour les compositions qui en comprennent, sont additionnées au précurseur A sous agitation, par exemple à 500rpm pendant 30 minutes, avant l'addition du précurseur B. Le mélange ainsi obtenu est déposé sur des lamelles pour microscope qui sont portées à 105°C pendant 20 heures. Les épaisseurs de revêtement ainsi obtenues sont de l'ordre de 0.2 à 4mm. Les lamelles sont ensuite découpées afin d'obtenir des échantillons de 1cm². Certaines sont immergées dans de l'eau déminéralisée pendant 48h ou une semaine, d'autres ne le sont pas et servent de témoin.

L'aspect de surface de ces échantillons est étudié au microscope à force atomique et leur mouillabilité est déterminée par des mesures d'angle de contact avec l'eau, avant et après un contact prolongé avec de l'eau qui peut être de 48 heures ou une semaine par exemple. Le calcul de l'énergie de surface se fait en utilisant le modèle de Owens, Wendt et Rabel.

Les images de microscopie à force atomique ont été réalisées par un microscope Nanoscope IIIa (Veeco, Inc) fonctionnant à température ambiante dans l'air en utilisant des cantilevers ayant une constante de ressort de 30 Nm-1 et une fréquence de résonance d'environ 300 kHz et fonctionnant en mode« tapping » (TMAFM), c'est-à-dire dans un mode où la fréquence de travail est plus petite que la fréquence de résonance. Les images obtenues sont ensuite digitalisées avec une résolution maximale de 512x512 pixels puis analysées grâce au logiciel du microscope à force atomique.

La mouillabilité des échantillons est déterminée à l'aide d'un appareil Kruss DSA 10 en utilisant la technique « sessile drop ». Le caractère hydrophobe du revêtement polymérique est évalué par des mesures d'angle entre la surface du revêtement et des gouttes d'eau ultra pure. Les résultats obtenus sont exprimés sous la forme d'une moyenne d'au moins cinq mesures.

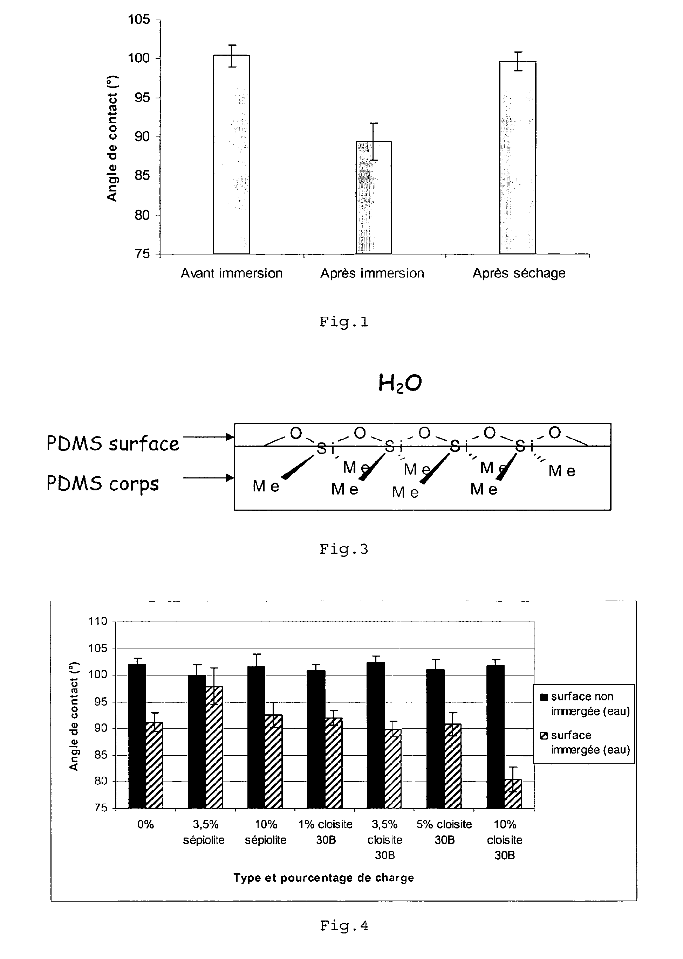

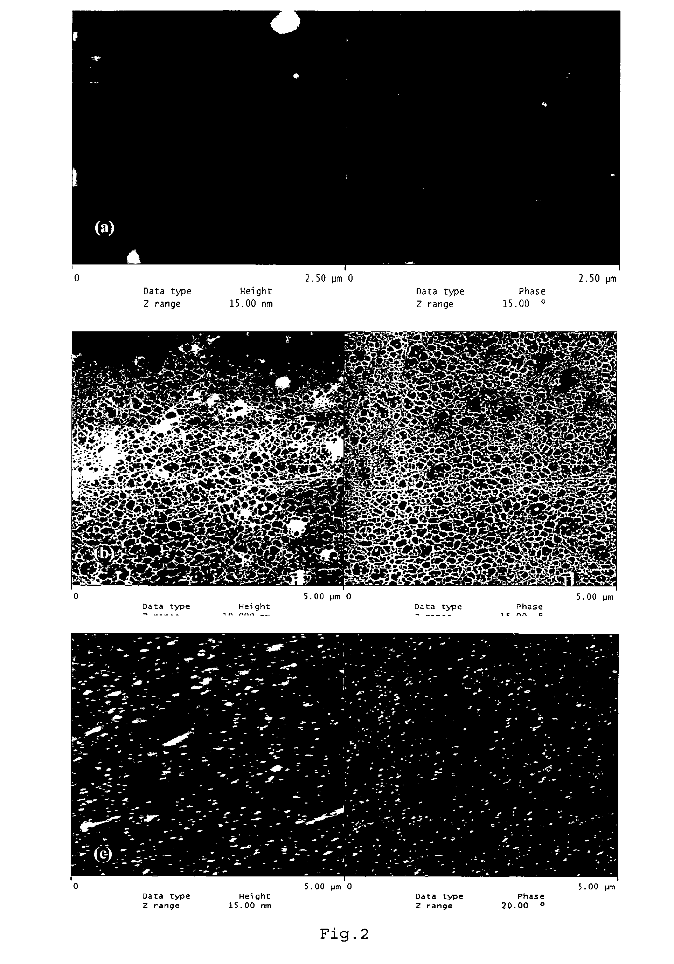

Comme le montre la Fig. 1, avant un contact prolongé avec de l'eau, un revêtement PDMS, qui ne comprend aucunes charges, présente un angle de contact d'environ 101°. Après un contact prolongé d'une semaine avec de l'eau distillée, l'angle passe de 101°à 89°, ce qui indique que la surface du revêtement est plus hydrophile. Néanmoins, après un séchage à température ambiante pendant 24h, le revêtement retrouve son caractère hydrophobe.

Les Fig. 2a à 2c montrent de façon intéressante que la surface du revêtement est lisse, homogène et sans caractéristiques structurelles particulières, alors qu'après un contact prolongé avec de l'eau, la surface du revêtement présente une importante modification ; il apparaît des structures, ou cavités, microporeuses d'environ 200nm ± 50nm de diamètre et d'environ 3 à 4nm de profondeur. Néanmoins, après séchage du revêtement, sa surface retrouve son aspect originel (Fig. 2c). Il apparaît ainsi que la présence de ces cavités entraîne la diminution du caractère hydrophobe de la surface du revêtement.

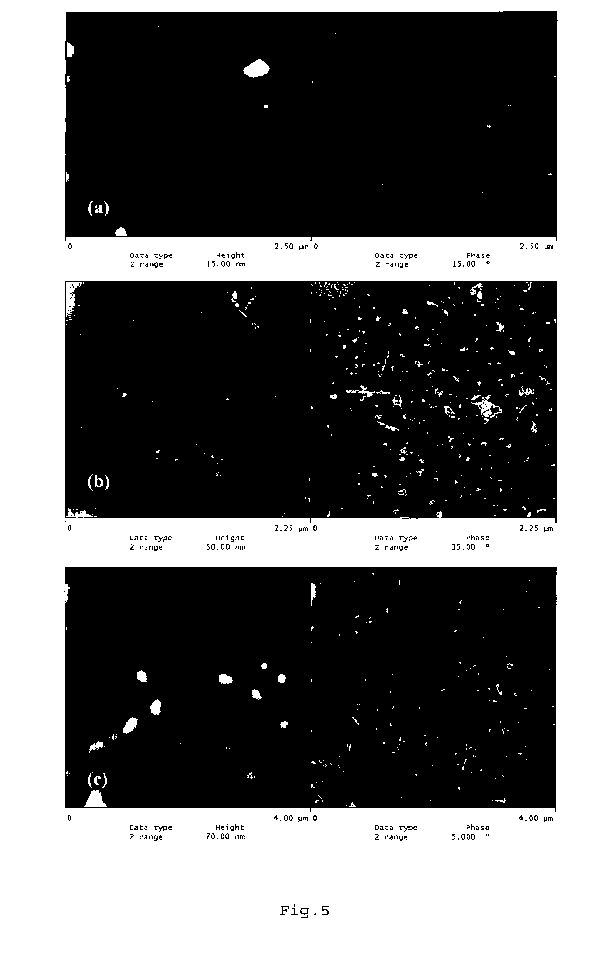

La modification de la surface d'un revêtement PDMS non chargé est un phénomène bien connu. Généralement, un tel résultat est obtenu en employant des additifs ou en oxydant le PDMS. Néanmoins, dans le cas présent, ni additifs, ni oxydation n'ont été employés. Cette modification de structure, qui se traduit également par l'apparition de cavités microporeuses (Fig. 2b), peut s'expliquer par le fait qu'une chaîne de polymère PDMS possède une structure en forme d'hélice dans laquelle les groupements méthyle des unités siloxane sont libres de rotation. Or, ces groupements méthyles, qui sont responsables de la faible tension de surface du PDMS, peuvent, dans un environnement très polaire, être repoussés à l'intérieur de l'hélice, exposant ainsi le squelette de la chaîne polysiloxane (Fig. 5), ce qui peut se traduire par une modification de la mouillabilité du revêtement PDMS.

Comme le montre la Fig. 4, l'angle de contact et donc la mouillabilité d'un PDMS non chargé ou d'un PDMS comprenant de la sépiolite ou de la cloisite 30B, sont sensiblement identiques, à savoir un angle d'environ 100°. Néanmoins, après avoir été immergés dans de l'eau, tous les PDMS n'ont pas le même comportement. Il est remarquable de noter qu'un PDMS comprenant 3,5% de sépiolite présente un angle de contact sensiblement identique à celui d'un PDMS non chargé qui n'aurait pas été mis en contact prolongé avec de l'eau, alors qu'un PDMS comprenant 1% à 5% de cloisite 30B présente une diminution significative de l'angle de contact, une diminution plus marquée pour un PDMS comprenant 10% de cloisite. Ainsi, la présence de 3,5% de sépiolite dans la matrice PDMS permet d'empêcher la diminution de l'hydrophobicité de la surface après un contact prolongé avec de l'eau, ce que ne permet pas la cloisite 30B.

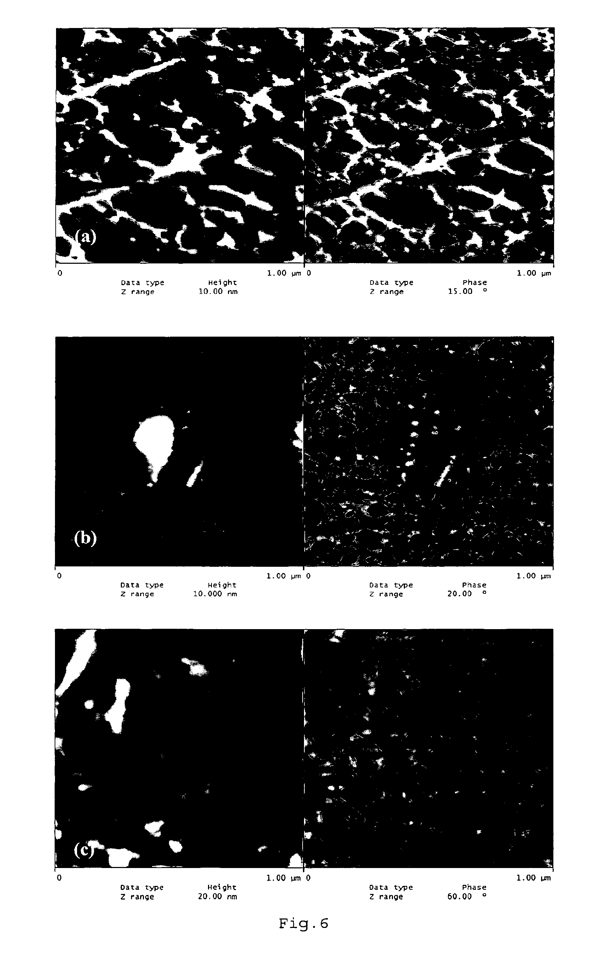

Comme le montrent les Fig. 5 (avant immersion) et Fig. 6 (après immersion), les revêtements ne comprenant aucune charge ou comprenant de la sépiolite présentent des cavités microporeuses. Néanmoins, les cavités observées pour le revêtement comprenant 3,5% de sépiolite sont plus petites que celles observées pour le revêtement ne comprenant pas de charge ou comprenant 10% de sépiolite.

Dans le revêtement comprenant 3,5% de sépiolite, il semblerait que les chaînes de polysiloxane soient moins mobiles et que leur faculté à se réorganiser dans un environnement polaire soit diminuée du fait de la sépiolite. Ainsi, la taille des cavités est moins importante et le revêtement apparaît ainsi plus hydrophobe.

Dans un revêtement comprenant 10% de sépiolite, la taille des cavités est plus importante et le revêtement apparaît plus hydrophile car à ce taux de charge la mauvaise dispersion de la sépiolite dans la matrice polymérique et la présence d'agrégats diminue le nombre d'interactions favorables entre sépiolite et polymère. Les chaînes polysiloxanes sont alors plus libres et se réorganisent plus facilement que dans un revêtement comprenant 3,5% de sépiolite.

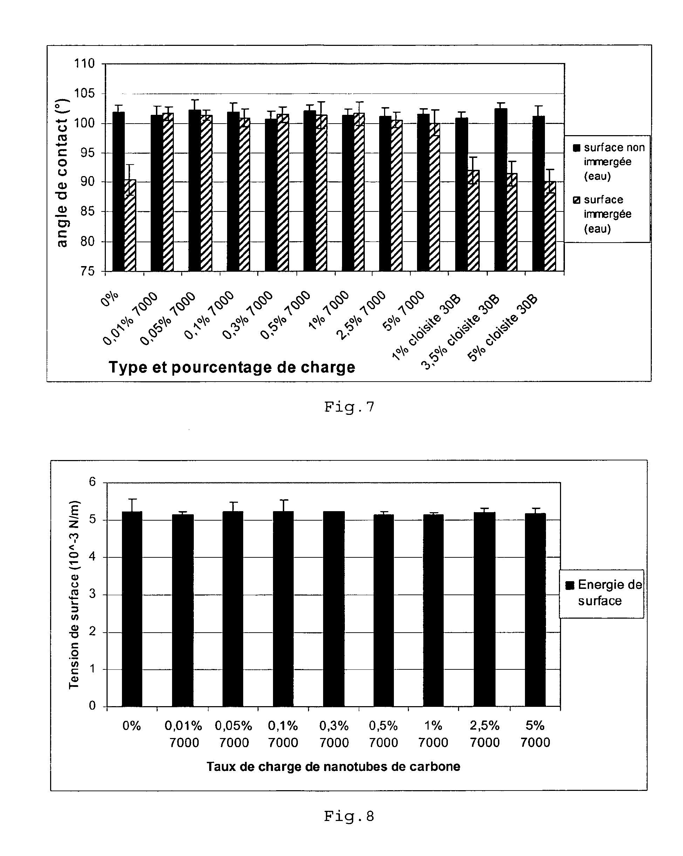

Comme le montre la Fig. 7, il est remarquable de noter que l'angle de contact, et donc la mouillabilité, d'un PDMS comprenant 0,01% à 5% en poids de nanotubes de carbone NC7000, ayant ou non été mis en contact prolongé avec de l'eau, est sensiblement identique à celui d'un revêtement PDMS non chargé n'ayant pas été immergé, contrairement à ce qui peut être observé pour la cloisite 30B. De même, l'énergie de surface des revêtements PDMS comprenant 0,01 à 5% de nanotubes de carbone est sensiblement identique à celle d'un revêtement PDMS ne comprenant aucune charge, soit aux environs 5.10⁻³ N/m, et reste constante lorsque le taux de charge en nanotubes de carbone augmente (Fig. 8).

De plus, il est également intéressant de noter que la surface des revêtements à base de PDMS comprenant au moins 0,1% de nanotubes de carbone multiparoi (NC 7000) montre déjà un comportement antistatique qui se confirme à partir de 0,3 % (Fig. 9). Ceci s'explique par la bonne qualité de la dispersion des nanotubes de carbone au sein de la matrice PDMS. La Fig. 9 représente la variation de la résistivité électrique en fonction du pourcentage de nanotubes de carbone multiparoi (NC 7000) d'un revêtement PDMS comprenant 0,01% à 5% de nanotubes de carbone.

La valeur de la résistivité électrique chute déjà considérablement pour une concentration en nanotubes de carbone aussi basse que 0,1% (82.000.000 Ohm/cm) et la résistivité électrique est déjà de 36.000 Ohm/cm pour une concentration en nanotubes de carbone de 1% en poids dans le PDMS. Par ailleurs, on atteint déjà une résistivité électrique de 560.000 Ohm/cm avec une concentration en nanotubes de carbone de 0.3% en poids dans le PDMS.

**Valeurs de la figure 9**

| **Concentration Nanotubes de carbone multiparoi en % poids (NC 7000)** | **Résistivité électrique du PDMS en Ohm.cm** |
|---|---|
| 0,05% | 5,5 E +12 |
| 0,1 % | 8,2 E +7 |
| 0,3 % | 5,6 E +5 |
| 0,5 % | 2,5 E +5 |
| 1 % | 3,6 E +4 |
| 2,5 % | 2,4 E +4 |
| 5 % | 1,2 E +4 |

Ainsi, le type de charge de la composition est un élément important car une composition à base de PDMS qui comprend une charge argileuse plaquettaire, en l'occurrence de la montmorillonite (cloisite 30B), ne permet pas d'obtenir les résultats obtenus avec des compositions comprenant une charge nanocylindrique. Il apparaît que seule une charge nanocylindrique permette de maintenir le caractère hydrophobe du revêtement dans lequel elle est incorporée.

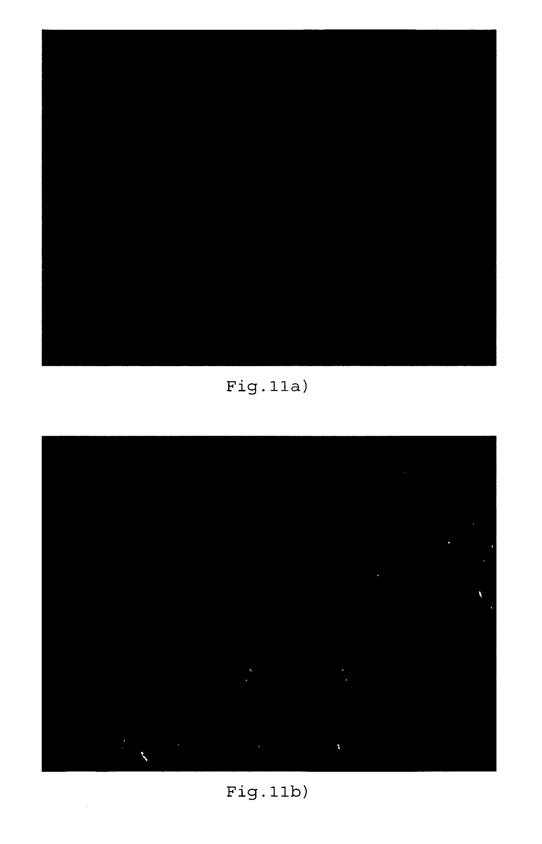

Parmi les compositions comprenant 0,01 et 5% de nanotubes de carbone, une discrimination peut être effectuée sur la base d'un test d'adhérence, ou test de pelage ou « peeling test ». Dans ce test, l'adhérence des revêtements PDMS est évaluée en appliquant une bande adhésive (Tesa 07476) sur les différents revêtements et en mesurant la force nécessaire pour la décoller. Il apparaît (Fig. 10) que la résistance au pelage reste constante pour des taux de charge de nanotubes de carbone inférieurs à 1%, ou tout du moins les résistances au pelage pour ces taux de charges est non significativement différentes les unes des autres, alors qu'au-delà de 1% la différence est nettement marquée. Ceci s'explique par le fait que plus le taux de charge en nanotubes de carbone est élevé, plus la viscosité augmente, ce qui entraîne une mauvaise dispersion des différentes parts constituant la matrice PDMS soumises à la réticulation. Ceci explique qu'à des taux de charge élevés en nanotubes de carbone la réticulation sera incomplète. Des chaînes de polymère laissées libres, dû à la réticulation incomplète, peuvent adhérer à la bande adhésive posée à la surface de la matrice PDMS lors du « peeling test ». Ces chaînes libres de polymère peuvent être arrachées de la surface de la matrice PDMS lorsque la bande adhésive est enlevée, entraînant une plus grande résistance de pelage de cette surface (Fig. 11). Ainsi, le pourcentage de nanotubes de carbone est avantageusement inférieur à 1% et se situe de préférence entre 0,01 et 0,5%.

L'effet des nanotubes de carbone sur la viscosité d'une composition à base de PDMS, en particulier sur les propriétés viscosimétriques du précurseur A, permet d'envisager l'application au pinceau de ce précurseur pour des formes de réalisation particulière de l'invention dans laquelle la charge nanocylindrique de la composition comprend au moins des nanotubes de carbone, c'est-à-dire dans une composition dans laquelle la charge nanocylindrique comprend des nanotubes de carbone et une ou plusieurs autres charges nanocylindriques qui ne sont pas des nanotubes de carbone, ou une composition dans laquelle la charge nanocylindrique est constituée de nanotubes de carbone.

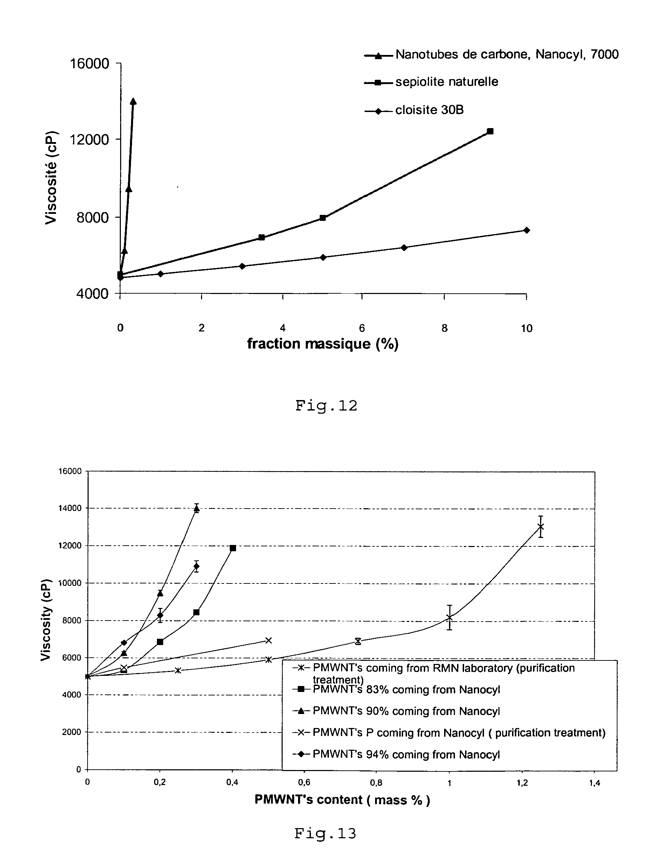

L'effet des nanotubes de carbone sur la viscosité des constituants du polymère dans lequel ils sont incorporés, notamment du précurseur A, est illustré à la Fig. 12. La viscosité du précurseur A contenant des nanotubes de carbones multiparoi est nettement augmentée par rapport à des compositions plus classiques contenant des charges argileuses.

Comme le montre la Fig. 13, la viscosité du précurseur A varie en fonction de différents paramètres tels que la taille, le diamètre et la pureté des nanotubes de carbones.

Il apparaît qu'un taux de charge de moins de 1% en poids de nanotubes de carbone permet une augmentation significative de la viscosité et plus particulièrement avec les nanotubes de carbone n'ayant subi aucun traitement post-synthétique. Ces derniers entraînent une augmentation significative de la viscosité du polymère avec de très faibles taux de charge compris entre 0,2% et 0,3% en poids. Cette augmentation surprenante de la viscosité s'explique par la très grande affinité des nanotubes de carbone bruts pour le polymère de polysiloxane, comme le montrent les mesures effectuées grâce à un test dit du "bound rubber" (Tableau 2). La procédure expérimentale de ce test consiste à extraire 3,5g du mélange précurseur A / nanotubes de carbone avec 30mL de solvant (heptane) pendant 4h à 25°C. Après centrifugation et évaporation du solvant, le résidu sec est pesé afin de déterminer la quantité de polymère PDMS lié aux nanotubes de carbone. Le Tableau 2 montre que les nanotubes bruts ont une affinité largement supérieure avec le précurseur A par rapport à la sépiolite et bien supérieure à une charge plaquettaire.

**Tableau 2 : Affinité des nanotubes de carbone pour la matrice polymérique de la composition**

| **Composition** | **Contenu de PDMS fixé par gramme de charge (en g)** | **Commentaires** |
|---|---|---|
| 0,5% en poids de MWNTs | 60 | |
| 0,1% en poids de MWNTs | 107 | Très bonne affinité |
| 5% en poids de sépiolite | 1.2 | |
| 0,5% en poids de sépiolite | 2.5 | Bonne affinité |
| 0,5% en poids de cloisite 30B | ∼ 0.1 | Pas d'affinité |

Ainsi, les propriétés viscosimétriques du précurseur A chargé faiblement en nanotubes de carbone permettent son application au pinceau en vue d'enduire la surface d'un matériau. Néanmoins, l'application de la compostions selon l'invention sur un support ou une surface peut se faire par tout moyen adéquat. Par exemple, l'application peut se faire par injection ou par coulage.

## Revendications

1. Utilisation en tant que revêtement antiadhésif d'une composition comprenant un polymère réticulé à base de polysiloxane et au moins une charge nanocylindrique.

2. Utilisation d'une composition selon la revendication 1, dans laquelle ladite charge nanocylindrique représente entre 0,01% et 5% en poids du poids total de ladite composition.

3. Utilisation d'une composition selon la revendication 2, dans laquelle ladite charge nanocylindrique représente entre 0,01% et 1% en poids du poids total de ladite composition.

4. Utilisation d'une composition selon l'une quelconque des revendications 1 à 2, dans laquelle la charge nanocylindrique comprend de la sépiolite.

5. Utilisation d'une composition selon la revendication 4, dans laquelle la sépiolite représente entre 0,01% et 3,5% en poids du poids total de ladite composition.

6. Utilisation d'une composition selon l'une quelconque des revendications 1 à 3, dans laquelle la charge nanocylindrique comprend des nanotubes de carbone.

7. Utilisation d'une composition selon l'une quelconque des revendications précédentes, dans laquelle ladite composition comprend de la sépiolite et des nanotubes de carbone.

8. Utilisation d'une composition selon l'une quelconque des revendications 6 ou 7, dans laquelle les nanotubes de carbone sont choisis parmi le groupe des nanotubes de carbone à simple paroi (SWNTs), à double paroi (DWNTs) ou à multiple paroi (MWNTs).

9. Composition antiadhésive et antistatique comprenant un polymère réticulé à base de polysiloxane et une concentration de nanotubes de carbone multiparoi comprise entre 0,1% et 1% en poids, ladite composition ayant une résistivité électrique inférieure à 100.000.000 Ohm.cm.

10. Composition antiadhésive et antistatique comprenant un polymère réticulé à base de polysiloxane et une concentration de nanotubes de carbone multiparoi comprise entre 0,3% et 1% en poids, ladite composition ayant une résistivité électrique inférieure à 1.000.000 Ohm.cm.

11. Composition antiadhésive et antistatique comprenant un polymère réticulé à base de polysiloxane et une concentration de nanotubes de carbone multiparois comprise entre 0,5% et 1% en poids, ladite composition ayant une résistivité électrique inférieure à 250.000 Ohm.cm.

12. Utilisation en tant que revêtement antistatique d'une composition antiadhésive comprenant un polymère réticulé à base de polysiloxane, ladite composition comportant une concentration de nanotubes de carbone multiparois comprise entre 0.1 et 5% en poids.

13. Utilisation en tant que revêtement antistatique d'une composition antiadhésive comprenant un polymère réticulé à base de polysiloxane, ladite composition comportant une concentration de nanotubes de carbone multiparois comprise entre 0.1 et 1% en poids.
